# FASCICULE DE BREVET EUROPEEN

(11) **EP 3 528 308 B1**
(45) Date de publication et mention de la délivrance du brevet: **02.06.2021**
(21) Numéro de dépôt: 19154652.2
(22) Date de dépôt: 31.01.2019
(51) Int. Cl.: H01M 50/213, H01M 50/383, H01M 50/30

(54) **PACK BATTERIE POUR BALISE DE DÉTRESSE**
BATTERIEPACK FÜR NOTSIGNALSENDER
BATTERY PACK FOR DISTRESS BEACON

(30) Priorité: 14.02.2018 FR 1851231
(43) Date de publication de la demande: 21.08.2019
(73) Titulaire: Orolia SAS, 56520 Guidel (FR)
(72) Inventeur: Vincent, GUILLEMARD, 56100 LORIENT (FR); Michel, PENN, 29340 RIEC SUR BELON (FR)
(74) Mandataire: Vidon Brevets & Stratégie

(56) Documents cités:
- FR-A1- 2 993 522
- JP-A- 2001 229 982
- US-A1- 2009 197 153
- US-A1- 2015 221 914
- US-A1- 2016 293 910
- US-A1- 2017 237 054

## Description

### Domaine technique de l'invention

Le domaine technique auquel se rapporte l'invention est celui des pack batteries de générateurs électrochimiques, telles les batteries et piles au lithium.

L'invention concerne plus particulièrement la protection d'un pack batterie de générateurs électrochimiques contre les conséquences d'un emballement thermique.

L'invention concerne, par ailleurs, une balise de détresse équipée d'un tel pack batterie.

### Etat de la technique

Les balises de détresse équipant les aéronefs, également appelées émetteurs de localisation d'urgence (ou "Emergency Locator Transmitter" en anglais), sont alimentées par une batterie interne, indépendante du circuit électrique de l'aéronef, destinée à fournir l'énergie électrique nécessaire à un fonctionnement autonome de la balise pendant quelques jours en cas de détresse. Le signal émis par la balise (classiquement dans la bande de fréquence 406 MHz) en cas de détresse pour donner l'emplacement de l'aéronef est ensuite reçu par un ou des satellites du réseau Cospas-Sarsat.

**Dans ce type de balise, la batterie est généralement formée d'une pluralité de cellules ou piles de stockage d'énergie électrique composées de lithium. Ces cellules ou piles sont disposées dans un boîtier de protection rigide afin de former ce que l'on appelle un pack batterie.** L'emballement thermique d'une cellule est le risque le plus redouté que présentent les batteries composées de lithium.

Le document US 2009/197153 décrit un pack batterie comprenant un boîtier pour loger une ou plusieurs batteries, le boîtier comporte un orifice de ventilation communiquant avec l'extérieur du boîtier. Le document FR 2 993 522 concerne une enveloppe de protection d'un équipement électrique embarqué dans un véhicule.

Ce phénomène d'emballement thermique est à l'origine d'un certain nombre d'incidents aux conséquences plus ou moins dramatiques.

La forte augmentation de température d'une cellule peut ainsi conduire à l'embrasement de la batterie, ce qui libère une quantité importante de fumées et de flammes, voir à l'explosion de cette dernière et à la projection de débris.

La sécurité des batteries composées de lithium au sein des balises représente par conséquent un enjeu très important.

### Exposé de l'invention

L'invention a pour objectif de proposer un pack batterie perfectionné, pour une balise de détresse notamment, palliant au moins certains des inconvénients de l'art antérieur cité ci-dessus.

Pour cela, l'invention concerne un pack batterie, destiné par exemple à équiper une balise de détresse, comprenant une pluralité de cellules de stockage d'énergie électrique positionnées selon un agencement parallèle dans un boîtier de protection, ledit boîtier de protection comprenant une paroi périphérique et étant obturé à deux extrémités opposées par un couvercle.

Selon l'invention, chacun des couvercles comprend au moins un orifice d'échappement de gaz pouvant se former à l'intérieur du boîtier de protection, et en ce qu'au moins une couche de matériau métallique à travers laquelle les gaz sont destinés à s'écouler est disposée entre la face intérieure du chacun des couvercles et les cellules.

L'invention propose la mise en œuvre dans le chemin d'échappement des fumées produites par l'emballement thermique d'une cellule à l'intérieur d'un pack batterie, un corps qui est perméable au passage des fumées.

Le corps précité comprend une masse de matériau métallique pour absorber la chaleur afin d'éteindre les flammes pouvant apparaître lors d'un tel emballement thermique.

L'extinction des flammes est obtenue dans un délai extrêmement court, en empêchant par conséquent leur propagation vers l'extérieur.

Les gaz sous pression qui peuvent se former à l'intérieur du boîtier peuvent s'échapper par des orifices ménagés dans les couvercles du boîtier.

Selon un aspect particulier de l'invention, le boîtier de protection comprend plusieurs logements de réception d'une cellule.

Avantageusement, des cloisons de séparation en matière plastique s'étendent à l'intérieur du boîtier de protection entre les logements de réception des cellules voisines.

Selon des mises en œuvre particulières de l'invention, ladite au moins une couche de matériau métallique prend la forme d'un réseau de fils métalliques ou d'une mousse métallique.

Dans des variantes de mise en œuvre, il peut s'agir d'un treillis de fils métalliques ou de copeaux métalliques compactés, ou d'un mélange des deux.

La masse métallique absorbe instantanément la chaleur des fumées, réduit la température et empêche la propagation des flammes.

Elle permet en outre d'absorber les explosions éventuelles d'une ou de plusieurs cellules.

Préférentiellement, le pack batterie comprend des moyens de fixation réversible des couvercles sur ledit boîtier de protection.

Selon une mise en œuvre particulière de l'invention, les cellules sont des cellules dont une électrode est composée de lithium.

Les cellules ou piles sont des cellules lithium soufre (Li-S) ou lithium-dioxide manganese (Li-MnO₂) ou lithium-chlorure de thionyle (Li-SOCl₂), par exemple.

Préférentiellement, au moins une couche de matériau isolant électrique est disposée entre ladite au moins une couche de matériau métallique et les cellules.

Selon l'invention, chaque couvercle porte sur sa face intérieure au moins une paroi en chicane définissant un trajet d'écoulement des gaz depuis l'intérieur du boîtier vers au moins un orifice d'échappement.

Ainsi, des chicanes formées sur la face intérieure des couvercles forcent les gaz à se propager indirectement vers les orifices de sortie.

L'invention concerne par ailleurs, une balise de détresse comprenant un pack batterie tel que décrit précédemment.

### Liste des figures

L'invention, ainsi que les différents avantages qu'elle présente, seront plus facilement compris à la lecture de la description suivante d'un mode de réalisation de celle-ci, donné à titres de simple exemple illustratif et non limitatif, et des dessins annexés, parmi lesquels :
- la figure 1 est une vue en éclaté d'un pack batterie conforme à l'invention;
- la figure 2 est une vue en perspective du pack batterie de la figure 1, partiellement assemblé ;
- la figure 3 est une vue en coupe schématique du pack batterie de la figure 1, et
- la figure 4 est une vue en perspective du pack batterie de la figure 1, une fois assemblé.

### Description détaillée de l'invention

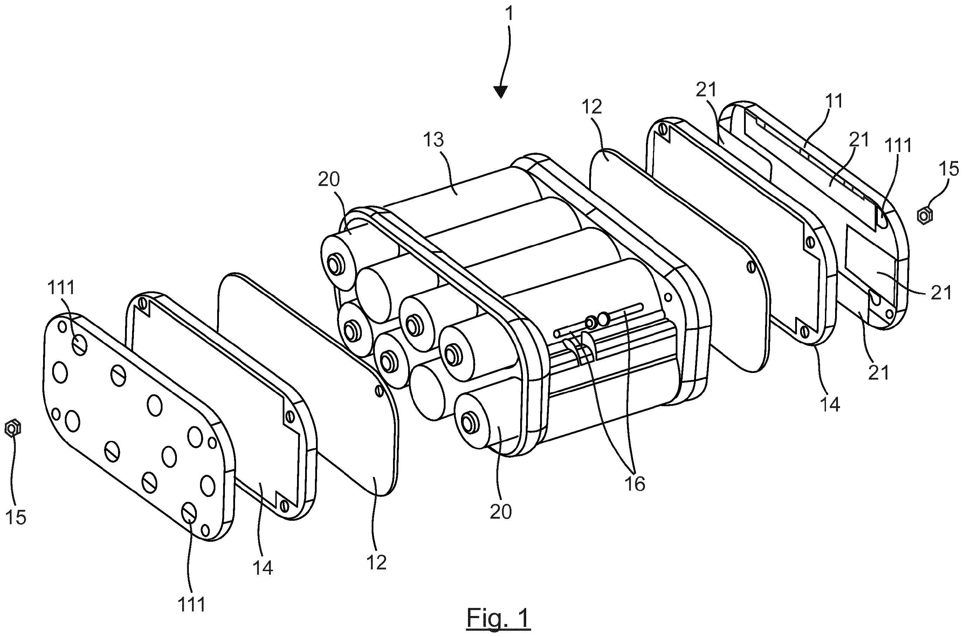

La figure 1 est une vue en éclaté d'un pack batterie selon l'invention.

Le pack batterie 1 comprend une pluralité de cellules ou piles 20 électrochimiques cylindriques et un boîtier de protection 13 rigide et étanche dans lequel la pluralité de cellules 20 est positionnée selon un agencement parallèle.

Des cloisons de séparation 132 sont positionnées entre les cellules 20 voisines.

Le boîtier 13 en plastique de réception des cellules 20 est obturé de façon étanche à ses deux extrémités opposées par deux couvercles 11 de fermeture.

Au moins une plaque ou couche 12 composée d'un matériau isolant électrique et perméable aux fumées, tel une mousse polyamide (PA), est disposée entre chaque couvercle 11 et la pluralité de cellules 20.

Ces cellules 20 sont composées de lithium et sont, par exemple, des cellules lithium soufre (Li-S) ou lithium-dioxide manganese (Li-MnO₂) ou lithium-chlorure de thionyle (Li-SOCl₂), non rechargeables.

Des vis 16 et des écrous 15 assurent la fixation des couvercles 11 et des plaques 12 sur le boîtier 13.

Au moins une couche ou plaque 14 de matériau métallique est disposée entre chaque couvercle 11 et la plaque 12 isolante correspondante.

Chaque couvercle 11 présente des orifices 111 d'évacuation ou d'échappement des gaz chauds, pouvant se former au sein du boîtier lors de l'emballement thermique d'une cellule 20, de l'intérieur vers l'extérieur du boîtier 13.

Chaque couvercle 11 comprend sur sa face intérieure des parois ou retours métalliques 21 formant chicane qui interdisent une sortie directe des gaz et augmentent leur chemin de sortie au travers du treillis métallique formant la plaque 14.

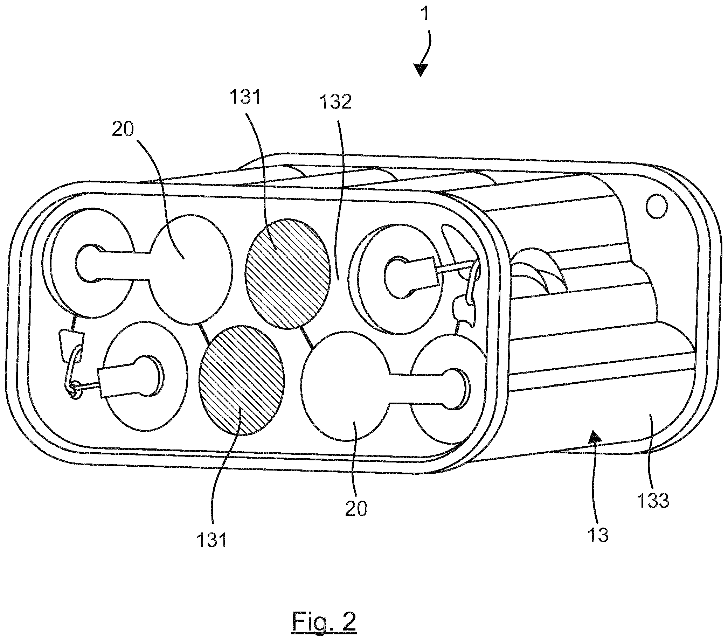

Comme visible sur la figure 2, le boîtier de protection 13 comprend une paroi 133 périphérique et plusieurs logements 131 tubulaires de réception d'une cellule 20.

Les cellules 20 sont reliées entre elles, en parallèle ou en série, de façon à créer un générateur électrique de tension et de capacité désirée.

Le boîtier 13 est en plastique et les cellules 20 sont des cellules comportant du lithium.

Sur cette figure 2, le boîtier 13 est représenté sans les couvercles 11 de fermeture, sans les plaques 14 métalliques et sans les plaques 12 isolantes.

A titre d'exemple, la largeur du boîtier 13 est de 95 mm, la hauteur du boîtier 13 est de 64 mm (69 mm avec les vis) et l'épaisseur égale à 44,5 mm.

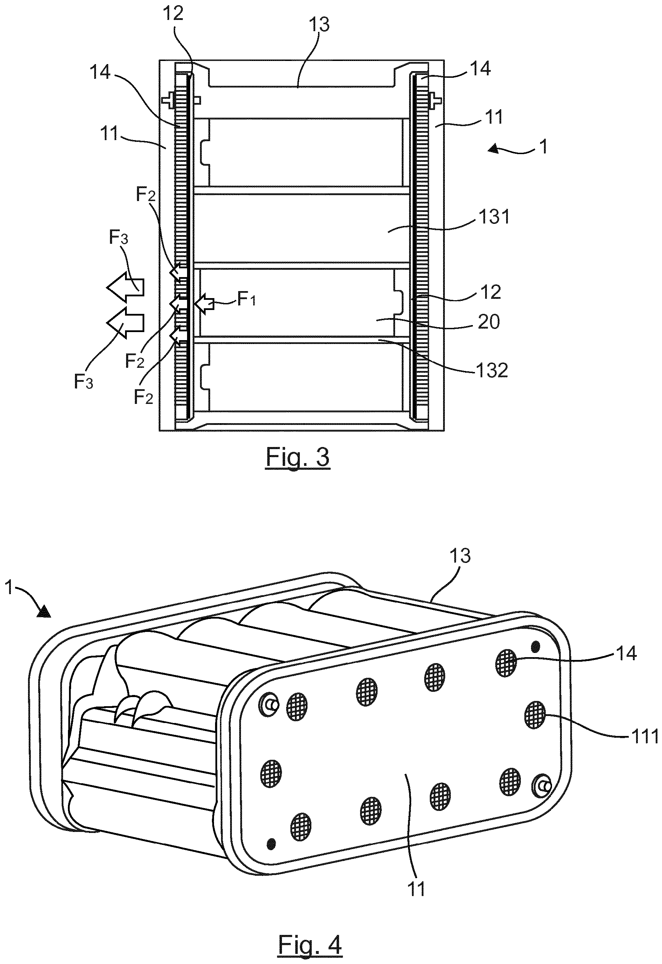

Sur la figure 4, le pack batterie 1 est assemblé. On distingue sur cette figure des portions de la plaque 14 de matériau métallique au travers des orifices 111 du couvercle 11.

Comme illustré sur la figure 3, le boîtier 13 a une structure interne qui définit un trajet pour faire circuler des gaz d'emballement thermique depuis une cellule 20 de batterie vers l'extérieur du boîtier 13.

Comme souligné auparavant, la plaque 14 est perméable au passage des fumées et comprend une masse de matériau métallique pour absorber la chaleur afin d'éteindre les flammes pouvant apparaître lors d'un tel emballement thermique.

On a représenté à l'aide des flèches F1 à F3 le trajet d'écoulement pour évacuer des gaz chauds hors de l'intérieur du boîtier 13, les gaz chauds s'échappant de l'intérieur du boîtier 13 vers l'extérieur en passant par la plaque 14.

Lorsque la cellule référencée 20 de la pluralité de cellules entre en emballement thermique, celle-ci émet des gaz chauds enflammés (flèche F1) et la pression au sein du boîtier 13 augmente.

Ces gaz enflammés sont dirigés au travers de la plaque isolante 12 puis de la plaque ou couche 14 de matériau métallique (flèches F2) prenant la forme d'un réseau ou treillis de fils métalliques (type paille de fer) ou d'une mousse métallique pour refroidir les gaz et éteindre les flammes.

Les gaz sont alors expulsés sous forme de fumée à l'extérieur du boîtier 13 (flèches F3), sans qu'aucune flamme ne sorte du boîtier 13.

Les cellules 20 sont isolées entre elles par des cloisons de séparation 132 en plastique de faible conductivité thermique (répondant à la norme de référence UL94 pour la classification de la résistance à la flamme des matériaux plastiques), ce qui permet d'éviter l'emballement thermique des cellules 20 adjacentes.

Chaque cloison de séparation 132 constitue une barrière au transfert de l'énergie thermique entre deux cellules 20 placées de part et d'autre de la cloison.

Chaque cloison de séparation 132 isole électriquement et thermiquement les cellules 20 les unes des autres.

En d'autres termes, les cloisons de séparation 132 protègent les cellules contre les gaz chauds évacués par une cellule voisine subissant un emballement thermique.

Pour éviter une pression interne trop élevée et critique, la sortie de la fumée par les orifices 111 d'échappement est mise en œuvre de chaque côté du pack batterie 1.

La solution de l'invention permet à la cellule subissant un emballement thermique d'évacuer correctement les gaz chauds, tout en protégeant le reste des cellules dans le pack batterie 1 contre les gaz chauds.

Une telle solution évite le rejet de liquide et la propagation de flammes vers l'extérieur du pack batterie 1.

La couche 14 de matériau métallique peut présenter une épaisseur comprise entre 1 et 15 mm, par exemple.

## Revendications

1. Pack batterie (1) comprenant une pluralité de cellules (20) de stockage d'énergie électrique positionnées selon un agencement parallèle dans un boîtier de protection (13), ledit boîtier de protection (13) comprenant une paroi périphérique (133) et étant obturé à deux extrémités opposées par un couvercle (11),
chacun des couvercles (11) comprenant au moins un orifice (111) d'échappement de gaz pouvant se former à l'intérieur du boîtier de protection (13), au moins une couche (14) de matériau métallique à travers laquelle les gaz sont destinés à s'écouler étant disposée entre la face intérieure du chacun des couvercles (11) et les cellules (20),
**caractérisé en ce que** chaque couvercle (11) porte sur sa face intérieure au moins une paroi en chicane définissant un trajet d'écoulement des gaz vers au moins un orifice (111) d'échappement.

2. Pack batterie (1) selon la revendication 1, **caractérisé en ce que** le boîtier de protection (13) comprend plusieurs logements (131) de réception d'une cellule (20).

3. Pack batterie (1) selon la revendication 2, **caractérisé en ce que** des cloisons de séparation (132) en matière plastique s'étendent à l'intérieur du boîtier de protection (13) entre les logements (131) de réception des cellules (20) voisines.

4. Pack batterie (1) selon l'une des revendications 1 à 3, **caractérisé en ce que** ladite au moins une couche (14) de matériau métallique prend la forme d'un réseau de fils métalliques ou d'une mousse métallique.

5. Pack batterie (1) selon l'une des revendications 1 à 4, **caractérisé en ce qu'**il comprend des moyens de fixation (15, 16) réversible des couvercles (11) sur ledit boîtier de protection (13).

6. Pack batterie (1) selon l'une des revendications 1 à 5, **caractérisé en ce que** les cellules (20) sont des cellules composées de lithium.

7. Pack batterie (1) selon l'une des revendications 1 à 6, **caractérisé en ce qu'**au moins une couche (12) de matériau isolant électrique est disposée entre ladite au moins une couche (14) de matériau métallique et les cellules (20).

8. Balise de détresse comprenant un pack batterie (1) selon l'une des revendications 1 à 7.

## Patentansprüche

1. Batteriepack (1), das eine Vielzahl von Speicherzellen (20) elektrischer Energie enthält, die gemäß einer parallelen Anordnung in einem Schutzgehäuse (13) positioniert sind, wobei das Schutzgehäuse (13) eine Umfangswand (133) enthält und an zwei gegenüberliegenden Enden von einem Deckel (11) verschlossen wird,
wobei jeder der Deckel (11) mindestens eine Austrittsöffnung (111) von Gas enthält, das sich im Inneren des Schutzgehäuses (13) bilden kann, wobei mindestens eine Schicht (14) aus metallischem Material, durch die hindurch die Gase strömen sollen, zwischen der Innenseite jedes der Deckel (11) und den Zellen (20) angeordnet ist,
**dadurch gekennzeichnet, dass** jeder Deckel (11) auf seiner Innenseite mindestens eine Prallflächenwand trägt, die eine Strömungsstrecke der Gase zu mindestens einer Austrittsöffnung (111) definiert.

2. Batteriepack (1) nach Anspruch 1, **dadurch gekennzeichnet, dass** das Schutzgehäuse (13) mehrere Aufnahmen (131) zum Empfang einer Zelle (20) enthält.

3. Batteriepack (1) nach Anspruch 2, **dadurch gekennzeichnet, dass** Trennwände (132) aus Kunststoff sich im Inneren des Schutzgehäuses (13) zwischen den Aufnahmen (131) zum Empfang der benachbarten Zellen (20) befinden.

4. Batteriepack (1) nach einem der Ansprüche 1 bis 3, **dadurch gekennzeichnet, dass** die mindestens eine Schicht (14) aus metallischem Material die Form eines Netzes von Metalldrähten oder eines Metallschaums annimmt.

5. Batteriepack (1) nach einem der Ansprüche 1 bis 4, **dadurch gekennzeichnet, dass** es Einrichtungen (15, 16) zur umkehrbaren Befestigung der Deckel (11) am Schutzgehäuse (13) enthält.

6. Batteriepack (1) nach einem der Ansprüche 1 bis 5, **dadurch gekennzeichnet, dass** die Zellen (20) aus Lithium bestehende Zellen sind.

7. Batteriepack (1) nach einem der Ansprüche 1 bis 6, **dadurch gekennzeichnet, dass** mindestens eine Schicht (12) aus elektrisch isolierendem Material zwischen der mindestens einen Schicht (14) aus metallischem Material und den Zellen (20) angeordnet ist.

8. Notrufbake, die ein Batteriepack (1) nach einem der Ansprüche 1 bis 7 enthält.

## Claims

1. Battery pack (1) comprising a plurality of electrical energy storage cells (20) positioned in a parallel layout in a protective casing (13), said protective casing (13) comprising a peripheral wall (133) and being closed at two opposite ends by a lid (11),
each of the lids (11) comprising at least one venting hole (111) for gases that that can form inside the protective casing (13), at least one layer (14) of metallic material, through which the gases are intended to flow, being disposed between the internal face of each of the lids (111) and the cells (20), **characterized in that** each lid (11) carries, on its internal face, at least one wall (21) in the form of a baffle defining a path of flow of the gases towards at least one venting hole (111).

2. Battery pack (1) according to claim 1, **characterized in that** the protective casing (13) comprises several reception housings (131) for receiving a cell (20) each.

3. Battery pack (1) according to claim 2, **characterized in that** partition walls (132) made of plastic extend within the protective casing (13) between the reception housings (131) of the neighboring cells (20).

4. Battery pack (1) according to one of the claims 1 to 3, **characterized in that** said at least one layer (14) of metallic material takes the form of a network of metal wires or of a metallic foam.

5. Battery pack (1) according to one of the claims 1 to 4, **characterized in that** it comprises means (15, 16) for the reversible affixing of the lids (11) to said protective casing (13).

6. Battery pack (1) according to one of the claims 1 to 5, **characterized in that** the cells (20) are cells composed of lithium.

7. Battery pack (1) according to one of the claims 1 to 6, **characterized in that** at least one layer (12) of electrically insulating material is disposed between said at least one layer (14) of metallic material and the cells (20).

8. Distress beacon comprising a battery pack (1) according to one of the claims 1 to 7.
